# EUROPÄISCHE PATENTSCHRIFT

(11) **EP 2 429 865 B1**
(45) Veröffentlichungstag und Bekanntmachung des Hinweises auf die Patenterteilung: **29.01.2014**
(21) Anmeldenummer: 10720901.7
(22) Anmeldetag: 11.05.2010
(51) Int. Cl.: B60R 21/13, F16B 7/18, F16B 7/00

(54) **VERBINDUNGSSYSTEM FÜR ROHRE EINES ROHRGESTÄNGES**
CONNECTING SYSTEM FOR TUBES IN A LINKAGE OF TUBES
SYSTÈME DE LIAISON POUR TUBES D'UNE TRINGLERIE TUBULAIRE

(30) Priorität: 11.05.2009 DE 102009020812
(43) Veröffentlichungstag der Anmeldung: 21.03.2012
(73) Patentinhaber: Visser Trading, 50735 Köln (DE)
(72) Erfinder: TROJAN, Alexander, 50735 Köln (DE)
(74) Vertreter: Strobel, Wolfgang
(86) Internationale Anmeldenummer: PCT/EP2010/056469
(87) Internationale Veröffentlichungsnummer: WO 2010/130742

(56) Entgegenhaltungen:
- EP-A1- 0 353 472
- EP-A1- 0 603 856
- US-A- 594 043

## Beschreibung

Die vorliegende Erfindung betrifft ein Verbindungssystem für Rohre eines Rohrgestänges, insbesondere eines Überrollkäfigs eines Rennfahrzeugs.

Bei Motorsporteinsätzen mit Tourenwagen, GT-Fahrzeugen, Rennsportwagen oder ähnlichen Fahrzeugen, unterliegen deren technische Ausgestaltung der Sporthoheit der Länder. Diese sind zusammengefasst unter der Sporthoheit der FIA, Paris. Insbesondere die Sicherheitsbestimmungen werden auf Einhaltung strengstens überwacht.

Als eines der wichtigsten Instrumente des Fahrerschutzes gilt der Überrollkäfig. Dieser wird aus Stahlrohren gebildet, die durch die FIA in ihren Ausführungen, Design, Material, Dimensionen, etc. klar definiert sind. Derartige Überrollkäfige bieten für alle denkbaren Aufprallsituationen in aller Regel einen verlässlichen Schutz. Die Rohre des Überrollkäfigs sind an bestimmten Stellen mit der Fahrzeugkarosserie verbunden und dienen heutzutage als konstruktive Versteifungselemente der Karosserie der Motorsportfahrzeuge.

Zur Sicherung bei Seitenaufprallsituationen sind im Bereich der Fahrertür eine oder mehrere Seitenrohrverstrebungen vorhanden, weitere Schutzeinrichtungen gibt es nicht.

Obwohl die bisherigen Seitenverstrebungen bei derartigen Seitenaufprallsituationen ausreichend Schutz bieten, besteht bei ihnen der große Nachteil, dass sie bei der Bergung des Fahrers bei verunglücktem Fahrzeug hinderlich sind. Dies rührt daher, dass die verbleibende Öffnung im Türbereich der Fahrzeuge durch das sogenannte "Rollcagesystem", also der oder den Seitenverstrebungen, so weit eingeschränkt wird, dass kaum Platz verbleibt, einen zum Beispiel bewusstlosen Fahrer, gegebenenfalls mit Wirbelverletzungen, etc., schnell, effektiv und schonend zu bergen.

Die Rettungs- und Bergungsmaßnahmen müssen somit teilweise mit Rettungsscheren durchgeführt werden, mit denen die Rohre der Seitenverstrebungen aufgeschnitten werden, um entfernt werden zu können. Dies benötigt entsprechende Werkzeuge vor Ort, mit dem entsprechenden zeitlichen Aufwand, sowohl für diese dorthin zu bringen als auch deren Einsatz, so dass dadurch die nicht unerhebliche Gefahr für Leib und Leben des Fahrers besteht und zudem auch noch eine weitere Brandgefahr des verunfallten Fahrzeuges zu besorgen ist.

EP 603 856 A1 beschreibt ein Verbindungssystem für Rohre eines Rohrgestänges gemäß den Oberbegriff des Anspruchs 1.

Der vorliegenden Erfindung liegt deshalb die Aufgabe zu Grunde, ein Verbindungssystem für Rohre eines Rohrgestänges, insbesondere eines Überrollkäfigs eines Rennfahrzeugs, zu schaffen, das es ermöglicht, Verstrebungen des Überrollkäfigs insbesondere nach einem Unfall sicher, einfach und in kürzester Zeit ohne zusätzliches Werkzeug bzw. durch die von den Streckenposten stets mitgeführten Werkzeuge zu lösen und zu entfernen, wobei die geforderte Unversehrtheit des Verbindungssystems im Renneinsatz leicht erkennbar ist.

Diese Aufgabe wird durch die Merkmale des Anspruchs 1 gelöst.

Das erfindungsgemäße Verbindungssystem ist ausgebildet mit einem ersten Verbindungselement, das mit einem ersten Rohr verbindbar ist, einem zweiten Verbindungselement, das mit einem zweiten Rohr verbindbar ist, einer Verriegelungseinrichtung, die dazu dient, das erste Verbindungselement mit dem zweiten Verbindungselement zur Herstellung einer Verbindung der beiden Verbindungselemente zu verbinden, wobei beide Verbindungselemente eine Durchgangsöffnung aufweisen, die zur Aufnahme der Verriegelungseinrichtung dient, und ein Lagerungselement vorgesehen ist, das zur formschlüssigen Verbindung des ersten und des zweiten Verbindungselements dient und durch das sich die Durchgangsöffnung ebenfalls erstreckt, wobei die Verriegelungseinrichtung einen Kopfabschnitt, der eine von einer Zylinderform abweichende Außenkontur aufweist, einen sich an den Kopfabschnitt anschließenden Verbindungsabschnitt, der eine Außenkontur aufweist, die zumindest teilweise kleiner ist als die Außenkontur des Kopfabschnitts, und einen Basisabschnitt aufweist, dessen Außenkontur größer ist als die Außenkontur des Verbindungsabschnitts, einem Verriegelungshebel, der eine Öffnung aufweist, die zumindest teilweise eine Innenkontur aufweist, die der Außenkontur des Kopfabschnitts entspricht, wobei die Innenkontur der Öffnung wenigstens leicht größer ist als die Außenkontur des Kopfabschnitts der Verriegelungseinrichtung, wobei zum Verriegeln der beiden Verbindungselemente untereinander der Verriegelungshebel über den Kopfabschnitt um den Verbindungsabschnitt darunter setzbar und durch Drehen um diesen Verbindungsabschnitt durch den Kopfabschnitt verriegelbar ist.

Vorteilhafterweise sind sowohl das erste als auch das zweite Verbindungselement L-förmig ausgebildet, was eine gute Anlage der beiden Verbindungselemente untereinander schafft und damit eine sichere Verbindung der jeweils verbundenen Rohre des Rohrgestänges gewährleistet.

Vorteilhafterweise weist das Lagerungselement eine abgeflachte Kugelform oder eine Kegelstumpfform auf. Mit der abgeflachten Kugelform wird eine besonders bevorzugte schnelle Entkoppelung der beiden Verbindungselemente erreicht, weil die Kugelform die größten Freiheitsgrade beim Entfernen der beiden Verbindungselemente voneinander bietet.

Aber auch eine Kegelstumpfform schafft ein leichtes Auseinanderbewegen der beiden Verbindungselemente im Schadensfall. Der Vorteil eines leichten Auseinanderbewegens der Verbindungselemente lässt sich leicht nachvollziehen, weil die Streckenposten der Rennstrecke im Falle eines Unfalls entsprechend unter Stress stehen, gegebenenfalls in Panik sind, wegen eines möglichen entstehenden Brandes bzw. wenn das Fahrzeug bereits in Brand steht und sich der verletzte Fahrer, unter Umständen bewusstlos, darin befindet.

Vorteilhafterweise ist das Lagerungselement als separates Element in entsprechende Ausnehmungen des ersten und zweiten Verbindungselements einsetzbar. Dies bringt insbesondere fertigungstechnische Vorteile mit sich und gestattet eine kompakte und platzsparende Ausgestaltung der Verbindungselemente.

Alternativ kann das Lagerungselement in Form einer Halbkugel oder eines Kegelstumpfes auch einstückig mit einem der Verbindungselemente ausgebildet sein, was eine besonders einfache Montage erlaubt und beim Auseinanderbauen ein weiteres separates an der Unfallstelle anfallendes Teil einspart.

Vorteilhafterweise können beispielsweise die Außenkontur des Kopfabschnitts der Verriegelungseinrichtung und die Innenkontur der Öffnung des Verriegelungshebels ellipsenförmig ausgebildet sein. Möglich sind jedoch auch andere alternative Ausführungsformen, wie Dreieck, Polygon, Trapez, etc. Alle Ausführungsformen müssen eine Außenkontur aufweisen, die größer ist als die Außenkontur des Verbindungsabschnitts der Verriegelungseinrichtung.

Mit Vorteil ist der Basisabschnitt der Verriegelungseinrichtung rechteckig, bevorzugt im Wesentlichen quadratisch ausgebildet. Er findet seinen Platz in einer entsprechenden Ausnehmung im zugeordneten Verbindungselement des erfindungsgemäßen Verbindungssystems, wobei vorteilhafterweise ein gewisses Spiel zwischen der Außenkontur des Basisabschnitts und der Innenkontur der Ausnehmung im Verbindungselement vorgesehen ist, wodurch ein mögliches Verkanten beim Lösen der Verbindung im Fall des Unfalls sicher verhindert wird.

Durch die zylinderförmige Ausgestaltung des Verbindungsabschnitts der Verriegelungseinrichtung kann dieser Abschnitt als Drehteil hergestellt werden, wobei die Dimensionierung des Durchmessers in Abhängigkeit von der zu erwarteten Belastung ausgelegt werden kann.

Üblicherweise verlaufen die Seitenstreben im Bereich der Fahrertüre von dem Rohr der A-Säule zu dem Rohr der B-Säule. Entsprechend sind pro rohrförmiger Seitenstrebe zwei Verbindungssysteme vorgesehen, um das jeweilige Seitenverstrebungsrohr vollständig und in kürzester Zeit durch Entriegeln der Verbindungssysteme lösen und entfernen zu können.

Oberhalb und um den Bereich der Öffnung des Verriegelungshebels kann weiterhin eine Angriffseinrichtung für ein Werkzeug, bevorzugt ein mehrkantförmiger insbesondere sechseckiger Vorsprung vorgesehen sein, der zum Angriff von bzw. zum Eingriff mit entsprechenden Werkzeugen, beispielsweise einem Schraubenschlüssel, einer Zange etc. dient.

Weiterhin ist vorteilhaft, dass eine Sicherungseinrichtung vorgesehen ist, die den Verriegelungshebel in seiner Verriegelungsstellung fixiert und die sich durch den Verriegelungshebel in das zugeordnete Verriegelungselement hinein erstreckt. Die Sicherungseinrichtung verhindert ein unbeabsichtigtes Öffnen des Verbindungssystems. In einer einfachen und wirksamen Ausgestaltung ist die Sicherungseinrichtung als Sicherungsstift ausgebildet. Der Sicherungsstift ist vorteilhafterweise aus Kunststoff gebildet, so dass er auch ohne Herausziehen bei Angriff eines entsprechenden Werkzeugs an dem Verriegelungshebel abscheren kann, was durchaus im Panikfall vorkommen kann. Ein einmal abgescherter Sicherungsstift ist leicht ersichtlich und muss entsprechend ausgetauscht werden. Beispielsweise ist der Sicherungsstift in einer Signalfarbe, wie rot oder orange ausgebildet, wodurch sein Zustand entsprechend schnell erkannt und überprüft werden kann.

Um in seiner Lage festgelegt zu werden, weist der Sicherungsstift eine am Umfang umlaufende Kerbe oder Einkerbung auf, die zum Eingriff mit einer elastisch bewegbaren Fixierungseinrichtung in dem zugeordneten Verbindungselement dient. Damit wird eine Einraststellung des Sicherungsstifts in dem erfindungsgemäßen Verbindungssystem geschaffen.

Zur Verbindung des ersten und/oder des zweiten Verbindungselements mit dem zugeordneten Rohr des Rohrgestänges ist ein Anschlußflansch an dem Verbindungselement vorgesehen. Dieser kann dazu dienen, mit dem zugeordneten Rohr des Rohrgestänges verschweißt zu werden.

Alternativ kann der Anschlußflansch ein Außen- oder ein Innengewinde aufweisen, das dazu dient, mit einem Innen- oder einem Außengewinde des zugeordneten Rohres des Rohrgestänges verschraubt zu werden.

Mit dem vorliegenden Verbindungssystem wird vorteilhafterweise ein System geschaffen, das bei Belastung sowohl im Zug- als auch im Druckbereich die gewählte Form beibehält, crashsicher ist, optisch gesichert ist, nachrüstbar sowie für andere Überrollkäfige bzw. Rohrgestänge wieder verwendbar ist, sofern nicht durch Crash bzw. Unfall einmal benutzt.

Vorteilhafterweise kann dieses Verbindungssystem an allen Endstücken der Verrohrung in Einsatz gebracht werden, wobei es sich insbesondere für den Türbereich eines Rennfahrzeugs eignet.

Weitere Einzelheiten, Merkmale und Vorteile der vorliegenden Erfindung ergeben sich aus der nachfolgenden Beschreibung unter Bezugnahme auf die beigefügten Zeichnungen. Darin zeigen:
- Figur 1: eine schematische perspektivische Ansicht einer bevorzugten Ausführungsform der vorliegenden Erfindung;
- Figur 2: eine Schnittansicht durch die Ausführungsform der vorliegenden Erfindung gemäß Figur 1, geschnitten entlang der Linie A-A von Fig. 3;
- Figur 3: eine Draufsicht auf die bevorzugte Ausführungsform der vorliegenden Erfindung gemäß den Fig. 1 und 2;
- Figur 4: eine Schnittansicht der bevorzugten Ausführungsform der vorliegenden Erfindung gemäß der Linie B-B von Fig. 3;
- Figur 5: eine Schnittansicht der bevorzugten Ausführungsform der vorliegenden Erfindung mit Sicherungsstift und Fixierungseinrichtung;
- Figur 6: eine perspektivische Ansicht der zapfenförmigen Verriegelungseinrichtung des erfindungsgemäßen Verbindungssystems;
- Figur 7: eine Schnittansicht der Verriegelungseinrichtung von Figur 6;
- Figur 8: eine Draufsicht auf die Verriegelungseinrichtung von Fig. 6;
- Figur 9: eine perspektivische Ansicht des ersten Verbindungselements des erfindungsgemäßen Verbindungssystems;
- Figur 10: eine Ansicht von oben auf das erste Verbindungselement von Fig. 9;
- Figur 11: eine Schnittansicht des ersten Verbindungselements gemäß der Linie V-V von Fig. 10;
- Figur 12: eine Ansicht von unten auf das erste Verbindungselement von Figur 9;
- Figur 13: eine perspektivische schematische Darstellung des zweiten Verbindungselements des erfindungsgemäßen Verbindungssystems;
- Figur 14: eine Ansicht von oben auf das zweite Verbindungselement von Fig. 13;
- Figur 15: eine Schnittansicht des zweiten Verbindungselements entlang der Linie A-A von Fig. 14;
- Figur 16: eine Seitenansicht auf das zweite Verbindungselement gemäß Pfeil B von Figur 14;
- Figur 17: eine perspektivische Ansicht auf die Unterseite des Verriegelungshebels des Verbindungssystems der vorliegenden Erfindung;
- Figur 18: eine Ansicht von unten auf den Verriegelungshebel von Fig. 17;
- Figur 19: eine Ansicht von oben auf den Verriegelungshebel von Fig. 17;
- Figur 20: eine Schnittansicht des Verriegelungshebels gemäß der Linie A-A von Figur 18;
- Figur 21: eine perspektivische Ansicht auf ein Lagerungselement in abgeflachter Kugelform des erfindungsgemäßen Verbindungssystems; und
- Figur 22: eine Seitenansicht auf den Sicherungsstift des erfindungsgemäßen Verbindungssystems.

In den Figuren sind gleiche Elemente mit den gleichen Bezugsziffern bezeichnet.

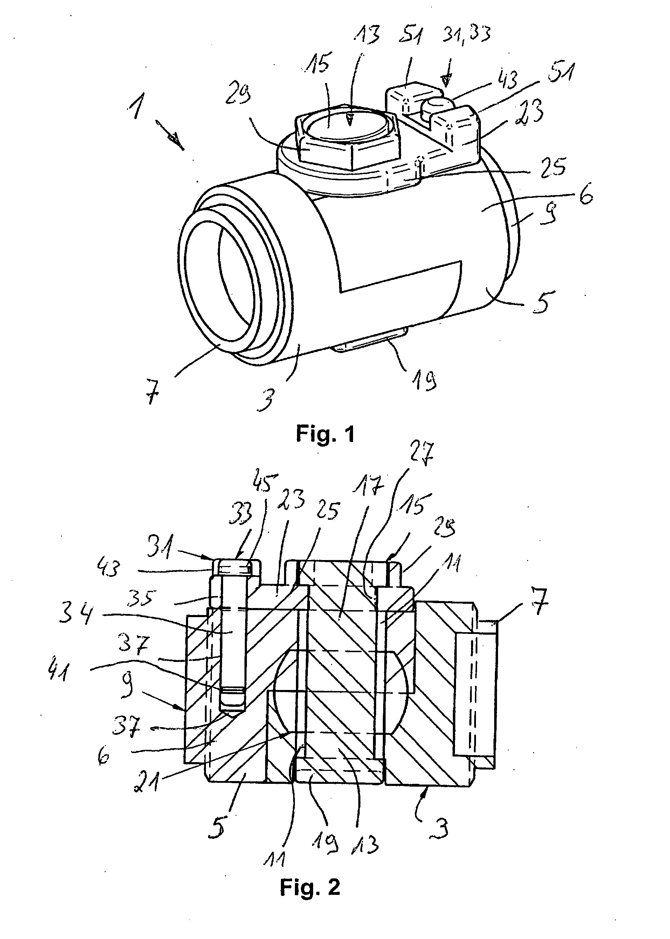

In Figur 1 ist eine schematische, perspektivische Ansicht einer bevorzugten Ausführungsform der vorliegenden Erfindung dargestellt. Ein erfindungsgemäßes Verbindungssystem 1 weist ein erstes Verbindungselement 3 und ein zweites Verbindungselement 5 auf. Beide Verbindungselemente 3, 5 sind L-förmig ausgebildet.

Das erste Verbindungselement 3 weist zur Verbindung mit einem zugeordneten Rohr eines Rohrgestänges (nicht dargestellt) einen Anschlussflansch 7 auf. Auch das zweite Verbindungselement 5 weist zur Verbindung mit einem Rohr eines Rohrgestänges (nicht dargestellt) einen Anschlussflansch 9 auf.

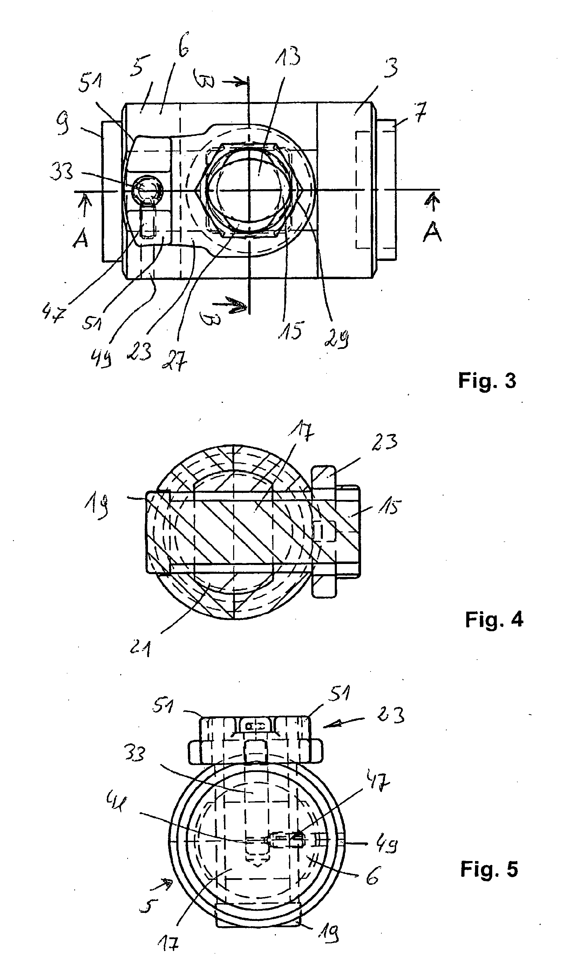

Wie deutlicher aus Fig. 2, die eine Schnittansicht entlang der Linie A-A von Fig. 3 ist, ersichtlich, ist sowohl im ersten Verbindungselement 3 als auch im zweiten Verbindungselement 5 eine Durchgangsbohrung oder Durchgangsöffnung 11 ausgebildet, durch die sich eine Verriegelungseinrichtung 13 erstreckt.

Die Verriegelungseinrichtung 13 ist zapfenförmig ausgebildet und weist einen Kopfabschnitt 15, einen gegenüber dem Kopfabschnitt 15 zumindest teilweise in der Außenkontur verjüngten. Verbindungsabschnitt 17 und einen dem gegenüber wieder vergrößerten Basisabschnitt 19 auf.

Wie aus Fig. 2 weiterhin deutlich ersichtlich, ist zur Fixierung des ersten Verbindungselements 3 gegenüber dem zweiten Verbindungselement 5 bzw. umgekehrt ein Lagerungselement 21 vorgesehen. Das Lagerungselement 21 ist in abgeflachter Kugelform ausgebildet, was weiter unten noch näher beschrieben wird.

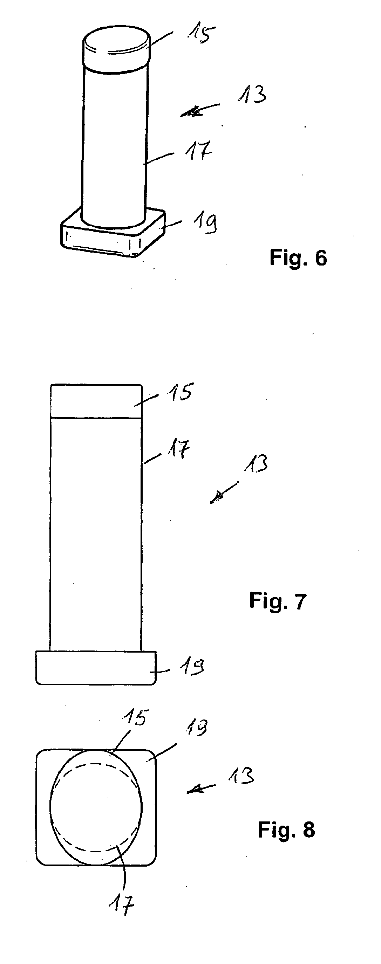

Wie aus den Figuren 1 und 2 weiterhin ersichtlich, weist das erfindungsgemäße Verbindungssystem 1 einen Verriegelungshebel 23 auf, der in den Figuren 1 und 2 in seiner Verriegelungsstellung dargestellt ist. Der Verriegelungshebel 23 weist einen plattenförmigen Abschnitt 25 auf, in dem eine der Kontur des Kopfabschnitts 15 der Verriegelungseinrichtung 13 angepasste Durchgangsöffnung 27 ausgebildet ist. Gemäß bevorzugtem Ausführungsbeispiel der vorliegenden Erfindung ist der Kopfabschnitt 15 der Verriegelungseinrichtung 13 elliptisch ausgebildet, wie insbesondere aus den Figuren 3 und 8 ersichtlich.

Wie aus Fig. 1 und Fig. 2 ersichtlich, befindet sich oberhalb des plattenförmigen Abschnitts 25 eine Angriffseinrichtung 29, die im dargestellten Ausführungsbeispiel als Sechskant ausgebildet ist und zum Angriff eines entsprechenden Werkzeugs, beispielsweise eines Schraubenschlüssels, einer Zange etc., dient.

Um den Verriegelungshebel 23 in seiner Verriegelungsstellung, wie in den Figuren 1 bis 3 deutlich gezeigt, festzulegen, ist eine Sicherungseinrichtung 31 in Form eines Sicherungsstiftes 33 vorgesehen. Dieser ist von oben durch eine Öffnung 35 im Verriegelungshebel 23 in eine Sacklochbohrung 37 eingesetzt.

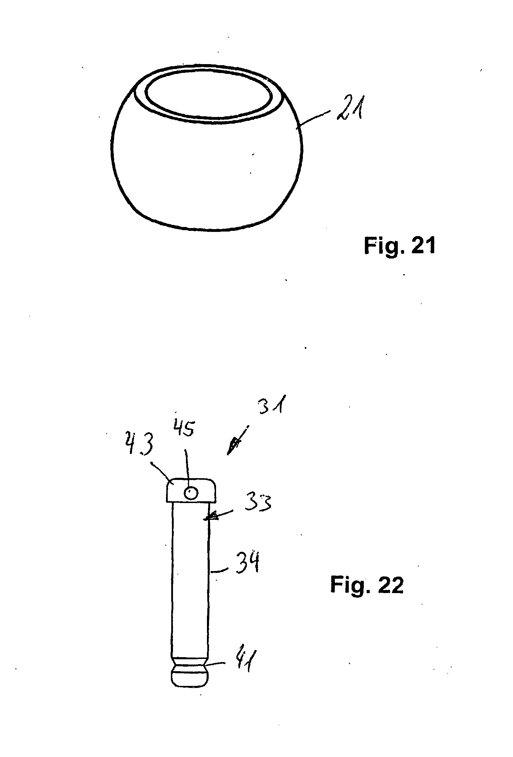

Wie aus Fig. 2 und Fig. 22, in der der Sicherungsstift 33 einzeln dargestellt ist, deutlich ersichtlich, ist im unteren Bereich des Sicherungsstiftes eine umlaufende Einkerbung 41 vorgesehen. Der Sicherungsstift 33 weist weiterhin einen, gegenüber seinem Schaft 34 vergrößerten Kopfabschnitt 43 auf, in dem eine Durchgangsöffnung 45 vorgesehen ist. Die Durchgangsöffnung 45 dient zur Aufnahme eines Rings, beispielsweise eines Stahlrings (nicht dargestellt), wie er beispielsweise bei Schlüsselanhängern Verwendung findet. Diesen Ring kann die Bedienungsperson leicht ergreifen, um den Sicherungsstift 33 aus seiner Lage herauszuziehen, wonach der Verriegelungshebel 23 leicht gedreht werden kann.

Damit der Sicherungsstift 33 in seiner Verriegelungsstellung verbleibt, ist, wie aus den Fig. 3 und 5 deutlich ersichtlich, eine elastisch bewegbare Fixierungseinrichtung 47, wie beispielsweise eine Feder, vorgesehen, die sich in einem seitlichen Kanal 49 eines kreisförmigen Abschnitts 6 des zweiten Verbindungselements 5 befindet. Das vordere Ende der Fixierungseinrichtung 47 greift in die Einkerbung oder Kerbe 41 des Sicherungsstiftes 33 ein, wie insbesondere aus Fig. 5 ersichtlich.

Zum Schutz des Kopfabschnitts 43 der Sicherungseinrichtung 31 bzw. des Sicherungsstifts 33 weist der Verriegelungshebel 23 zu beiden Seiten des Kopfabschnitts 43 des Sicherungsstifts 33 je einen, einstückig mit dem plattenförmigen Abschnitt 25 verbundenen Vorsprung 51 auf.

In den Figuren 6 bis 8 ist die Verriegelungseinrichtung 13 dargestellt, die zapfenförmig ausgebildet ist, wobei, wie aus Fig. 7 ersichtlich, der Kopfabschnitt 15, der elliptisch ausgebildet ist (Fig. 8) mit seiner kurzen Achse der Ellipse nicht größer ist als der Durchmesser des Verbindungsabschnitts 17.

Der Basisabschnitt 19 der Verriegelungseinrichtung 13 ist, wie insbesondere aus Fig. 8 ersichtlich, im Wesentlichen quadratisch ausgebildet. Selbstverständlich ist es möglich, auch andere Formen zu wählen, wie dreieckig, rund, oval etc.

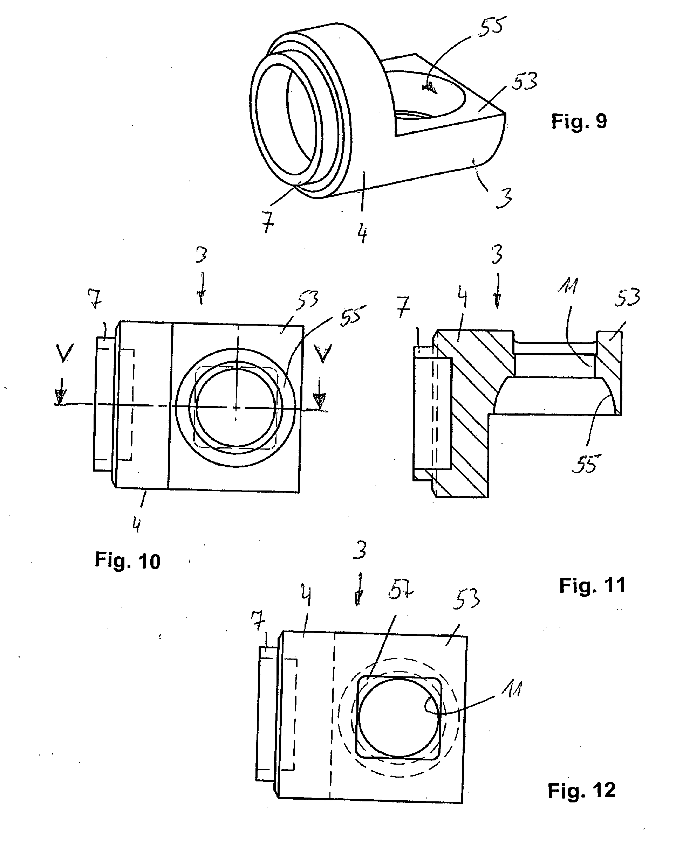

Es wird nunmehr Bezug genommen auf die Figuren 9 bis 12, in denen das erste Verbindungselement 3 einzeln dargestellt ist. Das erste Verbindungselement 3 weist einen kreisförmigen Abschnitt 4 auf, an dem sich der Anschlussflansch 7 befindet. Weiterhin weist das erste Verbindungselement 3 einen halbkreisförmigen Schenkel 53 auf, in dem eine Vertiefung 55 ausgebildet ist, zur Aufnahme des Lagerungselements 21.

Die Fig. 10 zeigt die Ansicht von oben auf die Vertiefung, die Fig. 11 den Schnitt entlang der Linie V-V von Fig. 10.

In der Ansicht von unten gemäß Fig. 12 ist die im Wesentlichen quadratisch ausgebildete Aufnahmeöffnung 57 ersichtlich, die zur Aufnahme des ebenfalls quadratischen Basisabschnitts 19 der Verriegelungseinrichtung 13 dient. Die Außenkontur des Basisabschnitts 19 wird dabei ein wenig geringer dimensioniert als die Innenkontur der Aufnahmeöffnung 57, so dass ein leichtes Einsetzen der Verriegelungseinrichtung 13 in das erste Verbindungselement 3 möglich wird und ein Verkanten der Verriegelungseinrichtung 13 beim Herausnehmen sicher vermieden wird. Weiterhin zeigt Fig. 12 eine kreisförmige Durchgangsöffnung 11. In einer alternativen Ausführungsform kann die Durchgangsöffnung 11 der Kontur des ellipsenförmigen Kopfabschnitts 15 der Verriegelungseinrichtung 13 angepaßt sein und beispielsweise rechteckig ausgebildet sein, derart, dass die Ausrichtung des Kopfabschnitts 15 bereits durch die Durchgangsöffnung 11 vorgegeben wird und die Verriegelungseinrichtung 13 dadurch bereits in die gewünschte Verriegelungsstellung eingesetzt wird.

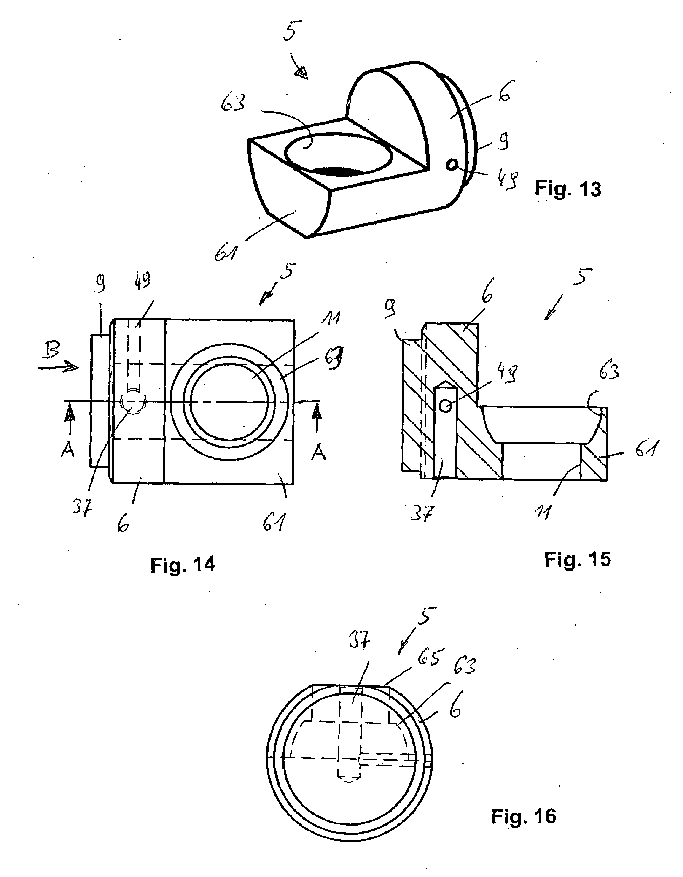

In den Figuren 13 bis 16, auf die nunmehr Bezug genommen wird, ist das zweite Verbindungselement 5 dargestellt. Wie ersichtlich, weist das zweite Verbindungselement 5 ähnlich wie das erste Verbindungselement 3 einen kreisförmigen Abschnitt 6 und einen nunmehr abgeflachten, im Wesentlichen halbkreisförmigen Schenkel 61 auf. In diesem Schenkel 61 ist ebenfalls eine Vertiefung 63 zur Aufnahme des Lagerungselements 21 ausgebildet.

In Fig. 15 ist deutlich das Sackloch 37 für den Sicherungsstift 33 und der Kanal 49 für die Fixierungseinrichtung 47 ersichtlich. Die Abflachung 65, die insbesondere deutlich aus Fig. 16 ersichtlich ist, dient als Auflage für den Verriegelungshebel 23.

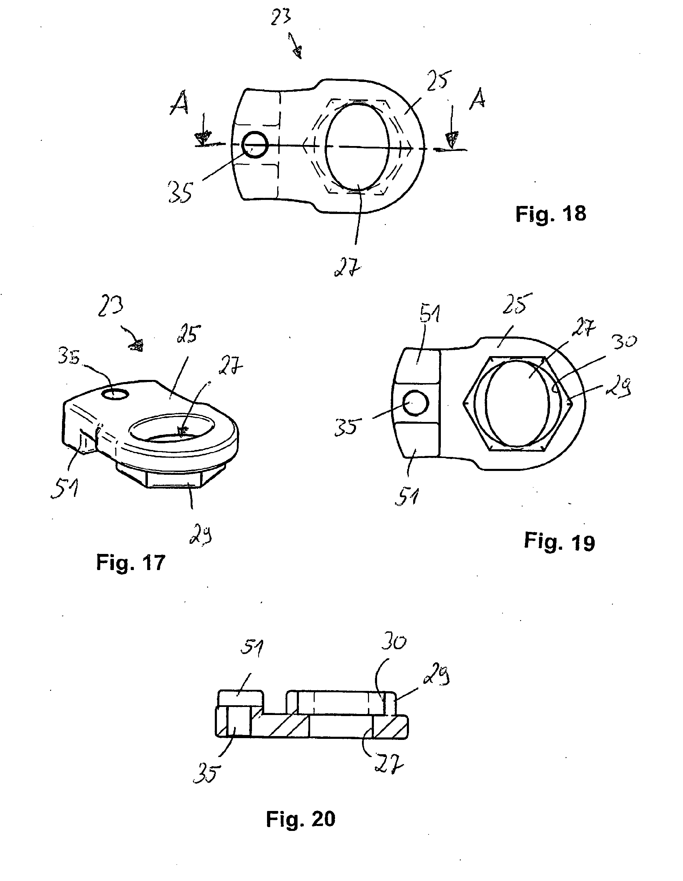

Es wird nunmehr Bezug genommen auf die Figuren 17 bis 20, in denen der Verriegelungshebel 23 einzeln dargestellt ist. In Fig. 17 ist der Verriegelungshebel 23 in perspektivischer Ansicht und zwar auf die Unterseite dargestellt und in Zusammenschau der Figuren 17 bis 19 ergibt sich deutlich die elliptische Innenkontur der Durchgangsöffnung bzw. Durchgangsbohrung 27.

Wie insbesondere aus Fig. 19 ersichtlich, weist die sechskantige Angriffseinrichtung 29 eine kreisförmige Innenausnehmung 30 auf, deren Durchmesser der langen Achse der elliptischen Durchgangsbohrung 27 entspricht.

In Fig. 21 ist in perspektivischer Ansicht die abgeflachte kugelförmige Ausgestaltung des Lagerelements 21 deutlich ersichtlich.

Der in Fig. 22 dargestellte Sicherungsstift 33 wurde bereits oben näher beschrieben.

Die Sicherheit des erfindungsgemäßem Verbindungssystems wird dadurch weiter erhöht, dass beispielsweise bei Verschweißen der Verbindungselement 3 und 5 mit den zugeordneten Rohren des Rohrgestänges, eine derart große Spannung entsteht, dass bei Öffnen des Verbindungssystems die zugeordneten Rohre aufeinander zu springen und die Spannung entlastet wird, wobei ein anschließendes Zusammensetzen und Verriegeln des Verbindungssystems nicht mehr möglich ist. Dies verhindert somit jegliches Manipulieren an dem Verbindungssystem vor dessen Einsatz im Motorrennsport.

Für das Lösen wird zunächst der Sicherungsstift mit Hilfe des an dessen Kopfabschnitt 43 befindlichen Ringes (nicht dargestellt) aus der Sacklochbohrung 37 herausgezogen. Danach kann mit einem entsprechenden Werkzeug, wie beispielsweise einem Schraubenschlüssel, einer Zange, etc. die Angriffseinrichtung 29 ergriffen werden und der Verriegelungshebel um 90° geschwenkt werden. Dadurch kommt die elliptische Durchgangsbohrung 27 in die selbe Stellung wie der darüber liegende Kopfabschnitt 15 der Verriegelungseinrichtung und, da die Kontur der Durchgangsbohrung 27 leicht größer ist als die Außenkontur des Kopfabschnitts 15, fällt die Verriegelungseinrichtung 13 entweder nach unten heraus oder kann leicht hinausgedrückt werden, wonach die beiden Verbindungselemente 3 und 5 voneinander getrennt werden können.

Im dargestellten Ausführungsbeispiel ist das Lagerungselement 21 als abgeflachte Kugel ausgebildet. Dies hat den Vorteil, dass schon ein geringes Entfernen der beiden Verbindungselemente 3 und 5 voneinander zu großer Freiheit in der Entfernungsbewegung der beiden Verbindungselemente zueinander führt. Alternativ kann das Lagerungselement 21 auch kegelstumpfförmig ausgebildet werden.

Im dargestellten Beispielsfalle ist das Lagerungselement 21 als separates Teil ausgeführt, das in die Vertiefungen 55 und 63 einsetzbar ist. Alternativ kann das Lagerungselement 21 auch einstückig mit einem der beiden Verbindungselemente 3 bzw. 5 ausgebildet sein und nicht als separates Teil vorliegen.

Mit der vorliegenden Erfindung wird somit ein sicheres Verbindungssystem für Rohre eines Rohrkäfigs insbesondere bei Motorsportfahrzeugen geschaffen, mit dem ein schnelles Lösen der Verbindung möglich ist und das den Zugang zum Innern des Fahrgastraumes des Fahrzeugs erheblich erleichtert, weil die behindernden Versteifungsrohre entsprechend schnell entfernt werden können, wonach die Streckenposten entsprechend schnell zu dem verunfallten Rennfahrer bzw. gegebenenfalls zu dessen Beisitzer gelangen können, um die verletzten Personen zu bergen.

Weitere Vorteile ergeben sich aus dem Nachfolgenden:
Die Fixierungseinrichtung 47 kann auch als ein Druckstift ausgebildet sein. In jedem Fall übt die Fixierungseinrichtung 47 eine definierte Kraft auf den Sicherungsstift 33 aus und lässt ihn erst nach Überwindung dieser Kraft aus dem Sackloch 37 herausziehen.

Zum besseren Anschluß der Rohre mittels Schweißen können die Anschlußflansche 7 und/oder 9 eine Fase bevorzugt von 30° aufweisen.

Als Basismaterial kann Stahl gewählt werden, wobei ein Korrosionsschutz beispielsweise durch chemisches Vernickeln vorgesehen ist. Alternativ kann das erfindungsgemäße Verbindungssystem 1 auch aus Kunststoff ausgebildet sein.

Grundsätzlich findet das erfindungsgemäße Verbindungssystem bei allen starren Verbindungen seine Anwendung, die im Bedarfsfall eine "Paniköffnung" ermöglichen sollen oder müssen.

## Patentansprüche

1. Verbindungssystem (1) für Rohre eines Rohrgestänges, insbesondere eines Überrollkäfigs eines Rennfahrzeuges, mit
einem ersten Verbindungselement (3), das mit einem ersten Rohr verbindbar ist,
einem zweiten Verbindungselement (5), das mit einem zweiten Rohr verbindbar ist,
einer Verriegelungseinrichtung (13), die dazu dient, das erste Verbindungselement (3) mit dem zweiten Verbindungselement (5) zur Herstellung einer Verbindung der beiden Verbindungselemente zu verbinden,
wobei beide Verbindungselemente (3, 5) eine Durchgangsöffnung (11) aufweisen, die zur Aufnahme der Verriegelungseinrichtung (13) dient, und ein Lagerungselement (21) vorgesehen ist, das zur formschlüssigen Verbindung des ersten und des zweiten Verbindungselements (3, 5) dient und durch das sich die Durchgangsöffnung ebenfalls erstreckt, **dadurch gekennzeichnet dass**
die Verriegelungseinrichtung (13) einen Kopfabschnitt (15), der eine von einer Zylinderform abweichende Außenkontur aufweist, einen sich an den Kopfabschnitt (15) anschließenden Verbindungsabschnitt (17), der eine Außenkontur aufweist, die zumindest teilweise kleiner ist als die Außenkontur des Kopfabschnitts (15), und einen Basisabschnitt (19) aufweist, dessen Außenkontur größer ist als die Außenkontur des Verbindungsabschnitts (17), wobei das Verbindungssystem (1)
einen Verriegelungshebel (23) aufweist, der eine Öffnung (27) aufweist, die zumindest teilweise eine Innenkontur aufweist, die der Außenkontur des Kopfabschnitts (15) entspricht, wobei die Innenkontur der Öffnung (27) wenigstens leicht größer ist als die Außenkontur des Kopfabschnitts (15) der Verriegelungseinrichtung (13), wobei zum Verriegeln der beiden Verbindungselemente (3, 5) untereinander der Verriegelungshebel (23) über den Kopfabschnitt (15) um den Verbindungsabschnitt (17) darunter setzbar und durch Drehen um diesen Verbindungsabschnitt (17) durch den Kopfabschnitt (15) verriegelbar ist.

2. Verbindungssystem nach Anspruch 1, **dadurch gekennzeichnet, dass** sowohl das erste als auch das zweite Verbindungselement (3, 5) L-förmig ausgebildet ist.

3. Verbindungssystem nach Anspruch 1 oder 2, **dadurch gekennzeichnet, dass** das Lagerungselement (21) eine abgeflachte Kugelform oder eine Kegelstumpfform aufweist.

4. Verbindungssystem nach Anspruch 3, **dadurch gekennzeichnet, dass** das Lagerungselement (21) als separates Element in entsprechende Vertiefungen (55, 63) des ersten und zweiten Verbindungselements (3, 5) einsetzbar ist.

5. Verbindungssystem nach Anspruch 1 oder 2, **dadurch gekennzeichnet, dass** das Lagerungselement eine abgeflachte Halbkugelform oder eine Kegelstumpfform aufweist und einstückig mit einem der beiden Verbindungselemente (3, 5) ausgebildet ist.

6. Verbindungssystem nach einem der Ansprüche 1 bis 5, **dadurch gekennzeichnet, dass** der Kopfabschnitt (15) der Verriegelungseinrichtung (13) ellipsenförmig ausgebildet ist.

7. Verbindungssystem nach einem der Ansprüche 1 bis 6, **dadurch gekennzeichnet, dass** der Basisabschnitt (19) der Verriegelungseinrichtung (13) rechteckig, bevorzugt im Wesentlichen quadratisch ausgebildet ist.

8. Verbindungssystem nach einem der Ansprüche 1 bis 7, **dadurch gekennzeichnet, dass** der Verbindungsabschnitt (17) der Verriegelungseinrichtung (13) zylinderförmig ausgebildet ist.

9. Verbindungssystem nach einem der Ansprüche 1 bis 8, **dadurch gekennzeichnet, dass** der Verriegelungshebel (23) an seiner Oberseite und die Durchgangsöffnung (27) umgebend eine Angriffseinrichtung (29) für ein Werkzeug aufweist.

10. Verbindungssystem nach Anspruch 9, **dadurch gekennzeichnet, dass** die Angriffseinrichtung (29) sechseckig ausgebildet ist.

11. Verbindungssystem nach einem der Ansprüche 1 bis 10, **dadurch gekennzeichnet, dass** eine Sicherungseinrichtung (31) vorgesehen ist, die den Verriegelungshebel (23) in seiner Verriegelungsstellung fixiert und die sich durch den Verriegelungshebel (23) in das zugeordnete Verriegelungselement (5) hinein erstreckt.

12. Verbindungssystem nach Anspruch 11, **dadurch gekennzeichnet, dass** die Sicherungseinrichtung (31) als Sicherungsstift (33) ausgebildet ist.

13. Verbindungssystem nach Anspruch 12, **dadurch gekennzeichnet, dass** der Sicherungsstift (33) aus Kunststoff ausgebildet ist.

14. Verbindungssystem nach Anspruch 12 oder 13, **dadurch gekennzeichnet, dass** der Sicherungsstift (33) eine Kerbe oder Einkerbung (41) aufweist, die zum Eingriff mit einer elastisch bewegbaren Fixierungseinrichtung (47) in dem zugeordneten Verbindungselement (5) dient.

15. Verbindungssystem nach einem der Ansprüche 1 bis 14, **dadurch gekennzeichnet, dass** das erste und/oder das zweite Verbindungselement (3, 5) einen Anschlußflansch (7, 9) aufweist, der mit dem zugeordneten Rohr des Rohrgestänges verschweißt ist.

## Claims

1. Connecting system (1) for tubes in a linkage of tubes, more particularly a roll cage of a racing vehicle, with
a first connecting element (3) which is connectable to a first tube,
a second connecting element (5) which is connectable to a second tube,
a locking mechanism (13) which serves to connect the first connecting element (3) to the second connecting element (5) to produce a connection of the two connecting elements, wherein the two connecting elements (3, 5) have a through opening (11) which serves to house the locking mechanism (13), and a bearing element (21) is provided which serves for positively connecting the first and the second connecting element (3, 5) and through which the through-opening likewise extends, **characterised in that** the locking mechanism (13) has a head section (15) which has an outer contour deviating from a cylindrical shape, a connecting section (17) which adjoins the head section (15) and has an outer contour which is at least in part smaller than the outer contour of the head section (15), and a base section (19), whose outer contour is larger than the outer contour of the connecting section (17), wherein the connecting system (1) has a locking lever (23) which has an opening (27) which has at least in part an inner contour which corresponds to the outer contour of the head section (15), wherein the inner contour of the opening (27) is at least slightly larger than the outer contour of the head section (15) of the locking mechanism (13), wherein in order to lock the two connecting elements (3, 5) to one another the locking lever (23) can be placed over the head section (15) and underneath and around the connecting section (17) and can be locked by the head section (15) by turning about this connecting section (17)

2. Connecting system according to claim 1 **characterised in that** both the first and also the second connecting element (3, 5) are formed L-shaped.

3. Connecting system according to claim 1 or 2 **characterised in that** the bearing element (21) has a flattened ball shape or a frusto-conical shape.

4. Connecting system according to claim 3 **characterised in that** the bearing element (21) can be inserted as a separate element into corresponding indentations (55, 63) of the first and second connecting elements (3,5).

5. Connecting system according to claim 1 or 2 **characterised in that** the bearing element has a flattened semi-spherical shape or a frusto-conical shape and is formed integral with one of the two connecting elements (3, 5).

6. Connecting system according to one of claims 1 to 5 **characterised in that** the head section (15) of the locking device (13) is designed elliptical.

7. Connecting system according to one of claims 1 to 6 **characterised in that** the base section (19) of the locking mechanism (13) is formed rectangular, preferably substantially square.

8. Connecting system according to one of claims 1 to 7 **characterised in that** the connecting section (17) of the locking mechanism (13) is formed cylindrical.

9. Connecting system according to one of claims 1 to 8 **characterised in that** the locking lever (23) has on its upper side and surrounding the through-opening an engagement device (29) for a tool.

10. Connecting system according to claim 9 **characterised in that** the engagement device (29) is designed hexagonal.

11. Connecting system according to one of claims 1 to 10 **characterised in that** a securing device (31) is provided which fixes the locking lever (23) in its locking position and which extends through the locking lever (23) into the associated locking element (5).

12. Connecting system according to claim 11 **characterised in that** the securing device (31) is formed as a securing pin (33).

13. Connecting system according to claim 12 **characterised in that** the securing pin (33) is made of plastics.

14. Connecting system according to claim 12 or 13 **characterised in that** the securing pin (33) has a notch or incision (41) which serves for engagement with an elastically movable fixing device (47) in the associated connecting element (5).

15. Connecting system according to one of claims 1 to 14 **characterised in that** the first and/or the second connecting element (3, 5) has a connecting flange (7, 9) which is welded to the associated tube of the tube linkage.

## Revendications

1. Système d'assemblage (1) pour des tubes d'une tringlerie tubulaire, en particulier d'une cage de protection contre les tonneaux d'un véhicule de course, comprenant
un premier élément d'assemblage (3), qui peut être assemblé avec un premier tube,
un second élément d'assemblage (5), qui peut être assemblé avec un second tube,
un dispositif de verrouillage (13), qui sert à assembler le premier élément d'assemblage (3) avec le second élément d'assemblage (5) pour créer un assemblage de ces deux éléments,
les deux éléments d'assemblage (3, 5) présentant une ouverture de passage (11), qui sert à recevoir le dispositif de verrouillage (13), et un élément de palier (21) étant prévu, lequel sert à l'assemblage par coopération de forme du premier et du second élément d'assemblage (3, 5) et au travers duquel s'étend également l'ouverture de passage, **caractérisé en ce que**
le dispositif de verrouillage (13) comporte une section de tête (15), qui présente un contour extérieur s'écartant d'une forme cylindrique, une section d'assemblage (17) qui se raccorde à la section de tête (15) et présente un contour extérieur au moins en partie plus petit que le contour extérieur de la section de tête (15), et une section de base (19), dont le contour extérieur est plus grand que le contour extérieur de la section d'assemblage (17),
le système d'assemblage (1) comportant un levier de verrouillage (23) pourvu d'une ouverture (27), qui présente au moins en partie un contour intérieur qui correspond au contour extérieur de la section de tête (15), le contour intérieur de l'ouverture (27) étant au moins légèrement plus grand que le contour extérieur de la section de tête (15) du dispositif de verrouillage (13), le levier de verrouillage (23), pour le verrouillage mutuel des deux éléments d'assemblage (3, 5), pouvant être abaissé par l'intermédiaire de la section de tête (15) autour de la section d'assemblage (17) et être verrouillé par la section de tête (15) par rotation autour de cette section d'assemblage (17).

2. Système d'assemblage selon la revendication 1, **caractérisé en ce qu'**aussi bien le premier que le second élément d'assemblage (3, 5) sont configurés en L.

3. Système d'assemblage selon l'une des revendications 1 et 2, **caractérisé en ce que** l'élément de palier (21) présente une forme sphérique aplatie ou une forme tronconique.

4. Système d'assemblage selon la revendication 3, **caractérisé en ce que** l'élément de palier (21) peut être mis en place en tant qu'élément séparé dans des creux appropriés (55, 63) du premier et du second élément d'assemblage (3, 5).

5. Système d'assemblage selon l'une des revendications 1 et 2, **caractérisé en ce que** l'élément de palier présente une forme hémisphérique aplatie ou une forme tronconique et est réalisé d'une seule pièce avec l'un des deux éléments d'assemblage (3, 5).

6. Système d'assemblage selon l'une des revendications 1 à 5, **caractérisé en ce que** la section de tête (15) du dispositif de verrouillage (13) a une configuration en forme d'ellipse.

7. Système d'assemblage selon l'une des revendications 1 à 6, **caractérisé en ce que** la section de base (19) du dispositif de verrouillage (13) a une configuration rectangulaire, de préférence essentiellement carrée.

8. Système d'assemblage selon l'une des revendications 1 à 7, **caractérisé en ce que** la section d'assemblage (17) du dispositif de verrouillage (13) a une configuration cylindrique.

9. Système d'assemblage selon l'une des revendications 1 à 8, **caractérisé en ce que** le levier de verrouillage (23) présente sur son côté supérieur et autour de l'ouverture de passage (27) un dispositif de prise (29) pour un outil.

10. Système d'assemblage selon la revendication 9, **caractérisé en ce que** le dispositif de prise (29) a une configuration hexagonale.

11. Système d'assemblage selon l'une des revendications 1 à 10, **caractérisé en ce qu'**il est prévu un dispositif de sécurité (31), qui fixe le levier de verrouillage (23) dans sa position de verrouillage et s'étend au travers du levier de verrouillage (23) dans l'élément d'assemblage (5) associé.

12. Système d'assemblage selon la revendication 11, **caractérisé en ce que** le dispositif de sécurité (31) est configuré sous forme de goupille de sécurité (33).

13. Système d'assemblage selon la revendication 12, **caractérisé en ce que** la goupille de sécurité (33) est réalisée en matière plastique.

14. Système d'assemblage selon l'une des revendications 12 et 13, **caractérisé en ce que** la goupille de sécurité (33) présente une entaille ou une rainure (41), qui sert de prise avec un dispositif de fixation (47) mobile élastiquement dans l'élément d'assemblage (5) associé.

15. Système d'assemblage selon l'une des revendications 1 à 14, **caractérisé en ce que** le premier et/ou le second élément d'assemblage (3, 5) présente une bride de raccordement (7, 9), soudée avec le tube associé de la tringlerie tubulaire.
